# EUROPÄISCHE PATENTSCHRIFT

(11) **EP 1 749 684 B1**
(45) Veröffentlichungstag und Bekanntmachung des Hinweises auf die Patenterteilung: **04.11.2009**
(21) Anmeldenummer: 06016433.2
(22) Anmeldetag: 07.08.2006
(51) Int. Cl.: B60J 5/04

(54) **Türmodul für einen Omnibus**
Door module for a bus
Module de portière pour un omnibus

(30) Priorität: 06.08.2005 DE 102005037170
(43) Veröffentlichungstag der Anmeldung: 07.02.2007
(73) Patentinhaber: MAN Nutzfahrzeuge Aktiengesellschaft, 80976 München (DE)
(72) Erfinder: Gülke, Norbert, Dr., 31139 Hildesheim (DE); Heidemann, Herbert, 38327 Semmenstedt (DE); Krimmling, Harald, 38126 Braunschweig (DE); Liesegang, Bernd, 38836 Dedeleben (DE)

(56) Entgegenhaltungen:
- EP-A- 0 646 517
- EP-B- 1 218 234
- DE-A1- 10 259 898

## Beschreibung

Die Erfindung betrifft eine Türeinheit für einen Omnibus, wobei die Türeinheit neben mehreren Einzelkomponenten aus zumindest einer Tür und einem Türantrieb gebildet ist.

Neben verschiedenen bekannten Türeinheiten zum Ein- und Ausstieg eines Omnibusses sind Türeinheiten mit ein- oder zweiflügeligen Türen bekannt. Der Omnibus kann dabei als Solofahrzeug oder als Gelenkfahrzeug mit Front- oder Heckantrieb ausgeführt sein, wobei eine unterschiedliche Anzahl von Türeinheiten am Fahrzeug vorhanden sein können. Eine Türeinheit befindet sich auf bekannte Weise im vorderen Bereich im Wesentlichen auf der Höhe des Fahrerarbeitsplatzes des Fahrzeugs, wobei bei Fahrzeugen, welche für den Rechtsverkehr bestimmt sind, die Türeinheit im Bugbereich auf der rechten Seite des Fahrzeugs und bei Fahrzeugen, welche für den Linksverkehr bestimmt sind, auf der linken Seite angeordnet ist. Weitere Türeinheiten können im Mittelteil oder im hinteren Teil des Fahrzeugs eingebaut sein.

Aus der DE 102 59 898 A1 ist ein Omnibus mit einem speziellen, eine derartige Türeinheit umfassendes Fahrgestell bekannt. Der Omnibus ist gekennzeichnet durch ein spezielles Fahrgestell mit einem Fahrgestellhinterteil mit Hinterachse und Antriebsaggregat samt Nebenaggregaten an einem hochflurigen, selbsttragenden Rahmenquerschnitt, einem Fahrgestellmittelteil, bestehend aus einem selbsttragenden Niederflurrahmen mit seitlichen äußeren Längsträgem, vorderen und hinteren Querträgern sowie sich zwischen den Längsträgern erstreckenden Querspanten, und einen mittragenden massiven Türrahmen in jedem der niederflurigen Fahrgestellteile, der dort als Teil eines Einstieges ein entsprechendes Stück des betreffenden Längsträgers an der vorgesehenen Stelle ersetzt und innerhalb des Niederflurrahrnens ein mittragendes Organ bildet, auf welchem ein Fahrgestell ein nicht oder kaum mittragender Omnibusaufbau befestigbar ist.

Ein Problem bei einem derartigen Aufbau entsteht dadurch, dass die Türeinheit selbst am jeweiligen Fahrgestellteil des Fahrzeugs montiert wird und somit eine konstruktive Gesamteinheit bildet. Dadurch ergibt sich eine nach der Montage nicht mehr veränderbare, d.h. aus- und einbaubare Einheit aus dem Fahrzeuggerippe, den tragenden Fahrzeugkomponenten und der Türeinheit. Die Montage erfordert eine sukzessive Aufeinanderfolge verschiedener Fügeoperationen, welche im Wesentlichen nicht zeitgleich ausführbar sind, wobei alle Fügeoperationen direkt am Fahrzeug vorgenommen werden müssen. Die Begrenzung der Montage direkt am Nutzfahrzeug ist somit zeitintensiv, da sie aufgrund der örtlichen Begrenzung Parallelmontagen behindert und nur jeweils aufeinander folgende Fügeoperationen möglich sind. Der Rahmen des Fahrzeugs muss abhängig vom Verwendungszweck (Reise- oder Linienbus) oder der Verkehrsrichtung wie Rechts- oder Linksverkehr entsprechend entwickelt und konstruiert werden, was sehr kostenintensiv ist. Zudem ist eine Montage und Funktionsprüfung einzelner Komponenten insbesondere der Türeinheit im Montageverbund vor der Endmontage außerhalb des Nutzfahrzeugs nicht möglich. Dieses Montageproblem konzentriert sich insbesondere auf die Türeinheiten für einen Omnibus, wobei elektrische, mechanische und fluidische Funktionskomponenten des Fahrzeugs mit den am Fahrzeug häufig mehrfach vorhandenen Türeinheiten verbunden werden müssen.

Es ist daher die Aufgabe der vorliegenden Erfindung, eine Türeinheit für einen Omnibus zu schaffen, bei der die Probleme des Standes der Technik vermieden werden und welche insbesondere auf eine schnelle und wirtschaftliche Weise bereitgestellt wird, wobei die Komponenten der Türeinheit außerhalb des Omnibusses, ggf. bei externen Zulieferern vormontierbar und bereits auf ein einwandfreies Zusammenspiel und die Funktion vorprüfbar sind.

Diese Aufgabe wird erfindungsgemäß durch eine Türeinheit für ein Nutzfahrzeug mit den Merkmalen des Patentanspruchs 1 gelöst. Vorteilhafte Weiterbildungen der Erfindung sind in den abhängigen Ansprüchen angegeben.

Die Erfindung schließt die technische Lehre ein, dass die Türeinheit als eigenständig handhabbares Türmodul ausgebildet ist und weiterhin einen Montagerahmen aufweist, wobei die zumindest eine Tür und der Türantrieb am Montagerahmen außerhalb des Omnibusses montierbar sind, das Türmodul definierte äußere Abmessungen, wie Höhe, Breite, Tiefe aufweist, und über mindestens eine Modulöffnung beispielsweise im Buggerippe des Omnibusses einsetzbar und mit diesem verbindbar ist.

Diese Lösung bietet den Vorteil, dass durch den modularen Aufbau eine Montage außerhalb des Omnibusses möglich ist und der Fahrzeugsrahmen unabhängig vom Verwendungszweck des Fahrzeugs als Reise- oder Linienbus und unabhängig von der Verkehrsrichtung wie Rechts- oder Linksverkehr gestaltet werden kann. Das Türmodul ist im Wesentlichen aus einem Montagerahmen aufgebaut, in welchem neben mehreren Submodulen insbesondere die Türen und der Türantrieb montierbar sind. In das Türmodul können dabei mittels einer Transport- oder Haltevorrichtung die Submodule in freier und ergonomischer Montage gefügt werden, wobei die Montage außerhalb des Omnibusses beispielsweise bei einem Zulieferer erfolgen kann. Das fertig montierte Türmodul ist damit schon außerhalb des Omnibusses auf die Funktion der einzelnen als Submodule ausgeführten Komponenten prüfbar, da diese bereits aufgrund ihrer Einzelmontage in Betrieb genommen werden können und hinsichtlich ihrer Funktion im Zusammenspiel mit den übrigen im Türmodul montierten Komponenten getestet werden können. Weiterhin kann das Türmodul ein Steuerungsteil umfassen, welches die Funktionen im Türmodul steuert und über eine standardisierte elektrische Verbindung mit dem Fahrzeug zur Steuerung der Türfunktion angesteuert werden kann, wobei modulintern Signale wie beispielsweise von einer Lichtschranke oder einer Kraftbegrenzung der Türbewegung vom Steuerungsteil verarbeitet werden. Bei einem Auftreten von Fehlfunktionen können im Türmodul vereinfacht defekte Submodule getauscht bzw. die Fehler behoben werden, da eine bessere Zugänglichkeit gegeben ist als im eingebauten Zustand des Türmoduls im Fahrzeug. Die Montage des Türmoduls kann unabhängig vom Montagestadium des Omnibusses erfolgen, womit sich der logistische Planungsaufwand am Montageort des Omnibusses selbst verringert. Das Türmodul kann so ausgeführt sein, dass dieses mit allen montierten Submodulen nach einer vollständigen Inbetriebnahme mittels einer geeigneten Hebe- /Schiebevorrichtung in die jeweils gewählte Modulöffnung am Buggerippe bzw. im entsprechenden Fahrzeugrahmenteil eingesetzt wird. Die Hebe- /Schiebevorrichtung wird erst nach erfolgter Verbindung des Türmoduls mit der Modulöffnung des Buggerippes entfernt. Die Verbindung des Türmoduls umfasst dabei neben der mechanischen Verbindung des Montagerahmens mit dem Buggerippe einzelne mechanische, elektrische oder fluidische Verbindungen der Submodule mit dem Fahrzeug. Der Montagerahmen kann zusätzlich mit einem als Submodul ausgeführten Teilrahmen ergänzt werden, der dann den Einbau einer einflügeligen Tür nebst Antrieb ermöglicht. Die beispielsweise einflügelige Tür kann sowohl an der einen als auch an der anderen Längsseite des Montagerahmens angeschlagen sein. Als Türvarianten können verschiedene Türen wie eine Außenschwenktür, eine Innenschwenk- oder Außenschwenkschiebetür, etc. mit entsprechenden elektrischen, pneumatischen oder hydraulischen Antrieben eingesetzt werden.

Vorteilhafterweise wird bei Fahrzeugen, welche für den Rechtsverkehr bestimmt sind, das Türmodul im Buggerippe bzw. Fahrzeugrahmen auf der rechten Seite des Fahrzeugs und bei Fahrzeugen, welche für den Linksverkehr bestimmt sind, auf der linken Seite im Buggerippe bzw. Fahrzeugrahmen des Fahrzeugs eingesetzt. Daher können im Buggerippe des Fahrzeugs sowohl auf der linken Seite als auch auf der rechten Seite standardisierte Modulöffnungen vorgesehen sein, welche ebenfalls standardisierte Montageschnittstellen zur Aufnahme des Türmoduls aufweisen. Die mechanische Verbindung wird dabei hauptsächlich zwischen dem Fahrzeug und dem Montagerahmen des Türmoduls vorgenommen, wobei die Submodule des Türmoduls wie beispielsweise eine Türbeleuchtung oder weitere mechanisch mit dem Öffnungs- bzw. Schließvorgang der Tür mitbewegten Bauteile mit der Peripherie im Fahrzeug elektrisch, mechanisch bzw. fluidisch verbunden werden. Die Modulöffnungen im Fahrzeugsrahmen sind dabei derart standardisiert, dass bei einem rechts- oder linksseitigen Einbau keine Veränderungen am Fahrzeugsrahmen vorgenommen werden müssen. Die Anschlüsse können zum Türmodul im Fahrzeug so positioniert sein, dass diese für jede Einbauseite des Türmoduls gleichermaßen verbindbar sind. Damit ist das Türmodul derart umfassend standardisiert, dass ein einziges Türmodul in jeder beliebigen Modulöffnung einsetzbar ist, also auch zwischen einem vorderen, mittleren und hinteren Fahrzeugteil tauschbar ist, oder darüber hinaus sogar modellunabhängig in verschiedenen Omnibussen einsetzbar ist, welche zudem verschiedene Ausstattungsvarianten aufweisen.

Nach einer möglichen Weiterbildung der Erfindung wird vorgeschlagen, dass am Türmodul standardisierte Anschlüsse für Elektrik, Hydraulik, Pneumatik und/ oder sonstige mechanische Verbindungs- und Befestigungselemente vorbereitet sind und dass elektrische, pneumatische und/oder fluidische Leitungen im Türmodul vormontiert sind. Die vorbereiteten Anschlüsse bieten vorteilhafterweise die Möglichkeit, beim Einsetzen und Befestigen des Türmoduls in die standardisierte Modulöffnung am Fahrzeug lediglich die Verbindungen zwischen den Submodulen und den peripheren Komponenten im Fahrzeug vorzunehmen. Die Standardisierung der Anschlüsse ermöglicht dabei eine Unabhängigkeit von der Lenkervariante oder sogar von der Modellvariante des Fahrzeugs, wobei die Anschlussgegenstücke im Fahrzeug so platziert sind, dass eine Verbindung der Anschlüsse sowohl bei einem Einsetzen in der linken als auch in einer rechten Modulöffnung im Fahrzeuggerippe erfolgen kann.

Insbesondere die elektrischen Anschlüsse der verschiedenen Submodule im Türmodul können als eine zentrale elektrische Verbindung ausgeführt sein, sodass in Form eines Sammelanschlusses die Verbindung zentral herstellbar ist, und nicht jedes Submodul einzeln verbunden werden muss. Ein weiterer Vorteil der vorbereiteten Anschlüsse ist die Möglichkeit der Vorprüfung der Einzelfunktionen der Submodule im vormontierten Türmodul außerhalb des Fahrzeugs, indem die standardisierten Anschlüsse an eine externe Prüfvorrichtung angeschlossen werden, mit welcher der spätere Betrieb des Gesamtsystems getestet werden kann. Durch die Standardisierung der Anschlüsse kann die Prüfvorrichtung für verschiedene Ausstattungs-, Modell- und Lenkervarianten einen einzigen Gegenanschluss aufweisen, welcher zur Verbindung mit den verschiedenen Varianten geeignet ist.

Eine vorteilhafte Ausgestaltung der Erfindung sieht vor, dass die Submodule mit dem Montagerahmen des Türmoduls durch Steckverbindungen, Schraubverbindungen oder Klebeverbindungen verbunden sind. Diese Verbindungsmittel ermöglichen vorteilhafterweise eine einfache und kostenminimale Verbindungstechnik, wobei die Verbindungselemente selbst ebenfalls Standardkomponenten wie Schrauben, etc. umfassen können. Damit ist auch eine nachträgliche Demontage wieder möglich, beispielsweise für eine endgültige Demontage des Türmoduls, zur Umrüstung auf ein anderes Fahrzeug oder eine andere Ausstattungsvariante. Auch Klebetechniken gestatten wie allgemein bekannt ein Lösen der Verbindung durch thermische oder chemische Einwirkung auf die Klebeverbindung, sodass hierdurch keine Einschränkung hinsichtlich der Demontierbarkeit der Submodule vom Grundmodul gesehen werden muss. Insbesondere Klebeverbindungen zeichnen sich durch vorteilhafte Eigenschaften für den Einsatz als Verbindungstechnik in dynamisch belasteten Bereichen wie einem Nutzfahrzeug dadurch aus, dass die Klebeverbindungen eine Dämpfungswirkung aufweisen, welche Geräusche wie ein Klappern oder ein Quietschen verhindern und sich im Betrieb nicht lockern oder lösen und somit wartungsfrei sind.

Weiterhin kann die Befestigung des Türmoduls an dem Fahrzeuggerippe mittels mechanischer Befestigungselemente erfolgen. Erst durch die Verbindung des Montagerahmens mit dem Fahrzeuggerippe entsteht hier ein tragendes Rahmenelement, da der Montagerahmen selbst nur die Anordnung der Tür-Submodule und deren Transport und Funktion miteinander ermöglichen soll. Die Befestigungselemente können als formschlüssige Verbindungen wie beispielsweise Schraubenverbindungen ausgeführt sein. Durch eine Lösbarkeit der Verbindung kann vorteilhafterweise bei einer späteren Änderung des Omnibusses durch geänderte Nutzungsbedingungen wie der Verkehrsrichtung oder dem Einsatz eines anderen Türmoduls in einem anders genutzten Fahrzeug wie ein Linien- oder Reisebus das Türmodul demontiert werden und in einem anderen Fahrzeug weiterbetrieben werden bzw. das Fahrzeug mit einem anderen Modul ausgestattet werden. Die Demontage kann soweit vereinfacht werden, dass sogar zu Wartungs- oder Reparaturzwecken ein vorübergehender Ausbau sinnvoll sein kann.

Eine weitere vorteilhafte Möglichkeit der Verbindung des Türmoduls mit dem Fahrzeuggerippe kann erreicht werden, indem die Befestigung des Türmoduls mit dem Fahrzeuggerippe durch ein Verkleben erfolgt. Damit können auch für die Fügeverbindung des Türmoduls mit dem Fahrzeug die Vorteile einer Klebeverbindung genutzt werden, wobei auch hier die Klebeverbindungen eine Dämpfungswirkung aufweisen, welche Geräusche wie ein Klappern oder ein Quietschen verhindern und sich im Betrieb nicht lockern oder lösen. Die entsprechenden Kontaktelemente des Türmoduls und des Buggerippes bzw. des Fahrzeugrahmens weisen dabei eine große Kontaktfläche auf, um eine ausreichende Festigkeit der Klebeverbindung zu erzielen.

Als eine Ausführungsform des Türmoduls kann vorgesehen werden, dass das Türmodul eine einflügelige oder eine zweiflügelige Tür aufweist. Dabei sind das eine bzw. beide Türflügel mit entsprechenden Befestigungselementen am Montagerahmen befestigt und mit dem Türantrieb zur Betätigung der Tür verbunden. Die mechanische Bewegungsübertragung vom Türantrieb in die Türflügel beschränkt sich dabei auf eine modulinterne Verbindung, sodass in Abhängigkeit von der Ausführungsform des Türmoduls eine Verbindung zum Buggerippe bzw. dem Fahrzeug auf eine elektrische bzw. elektrisch/fluidische Verbindung beschränkt sein kann. Die fluidische Verbindung zum Fahrzeug kann eine Pneumatikverbindung umfassen, wobei zur Türbetätigung eine druckluftbetätigte Bewegungseinheit mit einer Drucklufterzeugung im Fahrzeug verbunden ist.

Ferner kann es beispielsweise vorteilhaft sein, wenn der Montagerahmen L-förmig ausgebildet ist bzw. einen Modulboden aufweist. Hierdurch wird ein quasi L-förmiges Modul gebildet bei dem keine zusätzlichen Bodenelemente im Türbereich angebracht werden müssen, da sie bereits außerhalb des Fahrzeugs vormontiert sind.

Schließlich sieht eine vorteilhafte Weiterbildung vor, dass in den Modulboden Zugangseinrichtung für Rollstuhlfahrer integriert ist. Diese kann beispielsweise als manuell zu bedienende Klapprampe, als elektrisch angetriebene Schiebe-/Klapprampe oder als Hublift ausgebildet sein.

Nachfolgend wird eine vorteilhafte Ausführungsform der vorliegenden Erfindung zusammen mit der Beschreibung der Figuren näher dargestellt. Es zeigt:
- Fig. 1: eine schematische Darstellung eines Omnibusses mit mehreren Modulöffnungen;
- Fig. 2: eine Seitenansicht eines Omnibusses mit einer Modulöffnung für den Einbau eines Türmoduls;
- Fig. 3: eine Draufsicht eines Omnibusses mit einem schematisch dargestellten Türmodul, welches auf der Frontseite des Fahrzeugs eingesetzt ist;
- Fig. 4: eine Seitenansicht eines Omnibusses mit einem Doppel-Türmodul entsprechend der Darstellung in Figur 3; und
- Fig. 5: eine Seitenansicht eines Omnibusses mit einem Einfach-Türmodul.

Bei den Figuren handelt es sich lediglich um beispielhafte schematische Darstellungen.

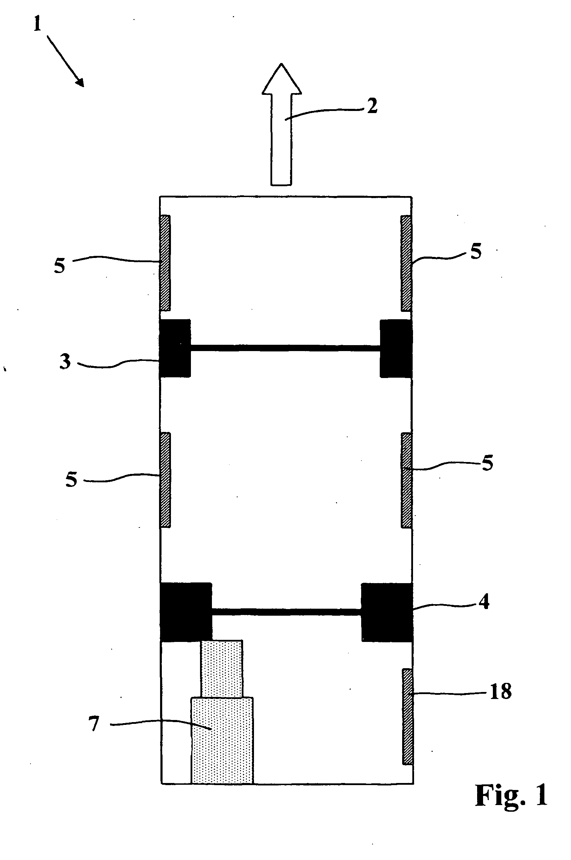

Fig. 1 zeigt eine Darstellung eines Omnibusses 1, wobei die Fahrtrichtung 2 durch einen Pfeil angedeutet ist. Der Omnibus 1 ist im dargestellten Ausführungsbeispiel ein Solofahrzeug mit den Achsen 3 und 4, wobei mehrere Modulöffnungen 5 dargestellt sind. Die Modulöffnungen 5 sind auf der rechten und linken Seite des Omnibusses 1 angeordnet, wobei die Modulöffnungen 5 in Fahrtrichtung 2 vor der Vorderachse 3 sowie hinter der Hinterachse 4 angeordnet sind. Die Modulöffnüngen 5 vor der Vorderachse sind in Fahrtrichtung 2 im Wesentlichen auf der Höhe des Fahrerarbeitsplatzes (nicht dargestellt) angeordnet, wobei in Abhängigkeit von der Lenkervariante für den Rechts- oder Linksverkehr gegebenenfalls das Türmodul 6 mit dem Fahrerarbeitsplatz tauschbar sind, wenn die Standardisierung der Modulöffnungen eine Aufnahme beider Komponenten wahlweise zulässt. Bei einer Linkslenkervariante des Omnibusses 1 wird das Türmodul 6 in die Modulöffnung 5 auf der rechten Fahrzeugseite und bei einer Rechtslenkervariante auf der linken Fahrzeugseite eingesetzt. Im hinteren Bereich des Omnibusses 1 können die Modulöffnungen 5 mittels speziell angepasster Verkleidungselemente verschlossen werden, wenn kein Türmodul 6 eingesetzt wird. Die Motor-Getriebeeinheit 7 befindet sich im Heck des Omnibusses 1, und kann optional für die Links- oder die Rechtslenkervariante auf der rechten oder der linken Seite im Heck des Fahrzeugs angeordnet sein, wobei im vorliegenden Ausführungsbeispiel der linksseitige Einbau gezeigt ist.

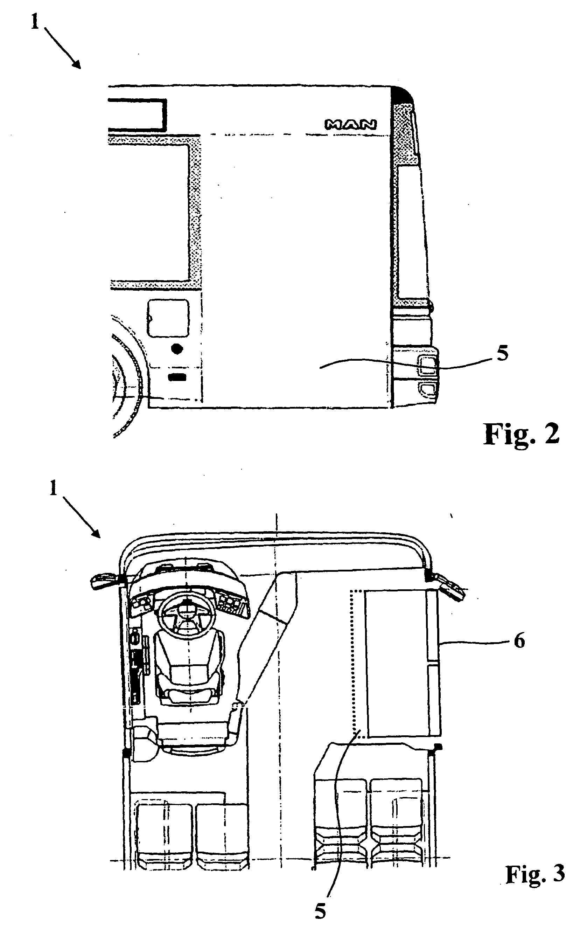

In Fig. 2 ist eine Seitenansicht eines Omnibusses 1 mit einer Modulöffnung 5 gezeigt, welche sich im vorderen Bereich des Fahrzeugs befindet. Die Modulöffnung 5 ist in der Darstellung lediglich schematisch gezeigt, wobei sich diese zum Einsetzen eines Türmoduls (nicht gezeigt) auf der rechten Seite des Fahrzeugs befindet, womit das Fahrzeug im Rechtsverkehr einsetzbar ist.

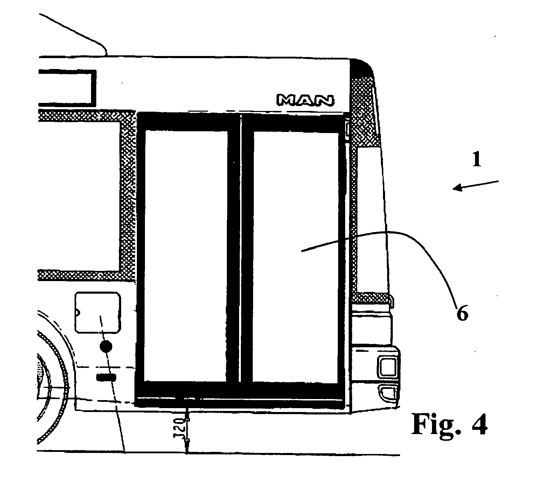

Eine Draufsicht eines Omnibusses 1 ist in Fig. 3 gezeigt, welcher eine Modulöffnung 5 aufweist, die sich auf der rechten vorderen Fahrzeugseite auf der Höhe des Fahrerarbeitsplatzes befindet. Die Modulöffnung 5 ist schematisch durch eine gestrichelte Linie angedeutet, wobei ein ebenfalls schematisch dargestelltes Türmodul 6 in die Modulöffnung 5 eingesetzt ist. In Figur 4 eine Seitenansicht eines Omnibusses mit einem Doppel-Türmodul entsprechend der Darstellung in Figur 3 gezeigt. Dabei ist das Türmodul vollständig in der Modulöffnung aufgenommen.

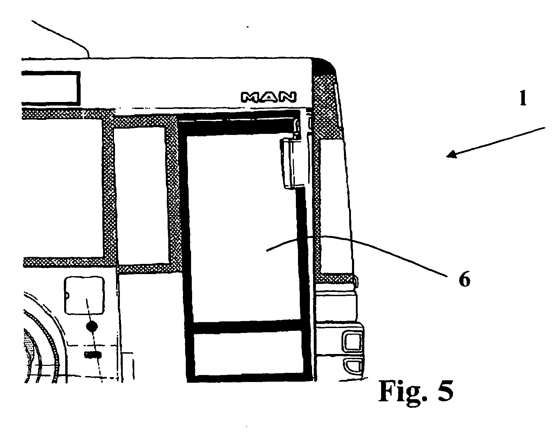

Figur 5 zeigt eine alternative Seitenansicht eines Omnibusses 1 mit einem Einfach-Türmodul.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Omnibus
- **2**: Fahrtrichtung
- **3**: Vorderachse
- **4**: Hinterachse
- **5**: Modulöffnung
- **6**: Türmodul
- **7**: Motor- Getriebeeinheit

## Patentansprüche

1. Türeinheit für einen Omnibus (1), wobei die Türeinheit neben mehreren Einzelkomponenten aus zumindest einer Tür und einem Türantrieb gebildet ist, **dadurch gekennzeichnet, dass** die Türeinheit als eigenständig handhabbares Türmodul (6) ausgebildet ist, welches einen Montagerahmen aufweist, wobei die zumindest eine Tür und der Türantrieb außerhalb des Omnibusses (1) am Montagerahmen montiert sind, das Türmodul (6) definierte äußere Abmessungen aufweist, und über eine Modulöffnung (5) im Fahrzeuggerippe eines Omnibusses (1) einsetzbar und mit diesem verbindbar ist.

2. Türeinheit für einen Omnibus nach Anspruch 1,
**dadurch gekennzeichnet, dass** das Türmodul (6) als Linkslenkermodul oder als Rechtslenkermodul ausgebildet ist.

3. Türeinheit für einen Omnibus nach Anspruch 1 und 2,
**dadurch gekennzeichnet, dass** am Türmodul (6) standardisierte Anschlüsse für Elektrik, Hydraulik, Pneumatik und/ oder sonstige mechanische Verbindungsund Befestigungselemente vorbereitet sind.

4. Türeinheit für einen Omnibus nach Anspruch 1 bis 3,
**dadurch gekennzeichnet, dass** elektrische, pneumatische und/oder fluidische Leitungen im Türmodul (6) vormontiert sind.

5. Türeinheit für einen Omnibus nach zumindest einem der vorgenanten Ansprüche,
**dadurch gekennzeichnet, dass** Submodule vorgesehen sind, die mit dem Montagerahmen des Türmoduls (6) durch Steckverbindungen, Schraubverbindungen oder Klebeverbindungen verbunden sind.

6. Türeinheit für einen Omnibus nach zumindest einem der vorgenanten Ansprüche,
**dadurch gekennzeichnet, dass** die Befestigung des Türmoduls (6) mit dem Fahrzeuggerippe mittels mechanischer Befestigungselemente erfolgt.

7. Türeinheit für einen Omnibus nach zumindest einem der vorgenanten Ansprüche,
**dadurch** gekenntzeichnet, dass die Befestigung des Türmoduls (6) mit dem Fahrzeuggerippe durch Verkleben erfolgt.

8. Türeinheit für einen Omnibus nach zumindest einem der vorgenanten Anspruche,
**dadurch gekennzeichnet, dass** das Türmodul (6) eine einflügelige oder eine zweiflugelige Tür aufweist.

9. Türeinheit für einen Omnibus nach zumindest einem der vorgenanten Anspruche,
**dadurch gekennzeichnet, dass** der Montagerahmen L-förmig ausgebildet ist bzw einen Modulboden aufweist.

10. Tureinheit für einen Omnibus nach Anspruch 9,
**dadurch gekennzeichnet, dass** in den Modulboden Zugangseinrichtung für Rollstuhlfahrer integriert ist.

## Claims

1. Door unit for a bus (1), with the door unit, in addition to several individual components, being formed of at least one door and a door drive system, **characterised in that** the door unit is designed as an independently manipulated door module (6) that has an assembly frame, with the at least one door and the door drive system being assembled outside the bus (1) on the assembly frame, and with the door module (6) having defined outer dimensions and being insertable via a module opening (5) in the vehicle framework of a bus (1) and being connectable with the vehicle framework.

2. Door unit for a bus according to claim 1,
**characterised in that** the door module (6) is designed as a left-hand-drive module or as a right-hand-drive module.

3. Door unit for a bus according to claims 1 and 2,
**characterised in that** standardised connections for electrics, hydraulics, pneumatics and/or other mechanical connecting and fastening elements are arranged on the door module (6).

4. Door unit for a bus according to claims 1 to 3,
**characterised in that** electrical, pneumatic and/or fluid lines are preassembled in the door module (6).

5. Door unit for a bus according to at least one of the preceding claims,
**characterised in that** sub-modules are provided that are connected with the assembly frame of the door module (6) by means of plug connections, screw connections or adhesive connections.

6. Door unit for a bus according to at least one of the preceding claims,
**characterised in that** fastening of the door module (6) with the vehicle framework is carried out by means of mechanical fastening elements.

7. Door unit for a bus according to at least one of the preceding claims,
**characterised in that** fastening of the door module (6) with the vehicle framework is carried out by means of gluing.

8. Door unit for a bus according to at least one of the preceding claims,
**characterised in that** the door module (6) has a single-leaf or double-leaf door.

9. Door unit for a bus according to at least one of the preceding claims,
**characterised in that** the assembly frame is designed in an L-shape and has a modular base.

10. Door unit for a bus according to claim 9,
**characterised in that** an access device for wheelchair users is integrated in the modular base.

## Revendications

1. Unité de porte pour un bus (1), auquel cas l'unité de porte est composée, en plus de plusieurs composants individuels, d'au moins une porte et d'un mécanisme d'entraînement de porte, **caractérisée en ce que** l'unité de porte est formée comme module de porte (6) manipulable de manière autonome, qui présente un cadre de montage, auquel cas au moins une porte et le mécanisme d'entraînement de la porte sont montés en dehors du bus (1) sur le cadre de montage, et le module de porte (6) présente des dimensions extérieures définies et peut être monté dans l'ossature d'un bus (1) via une ouverture pour module (5) et être relié à celui-ci.

2. Unité de porte pour un bus selon la revendication 1,
**caractérisée en ce que** le module de porte (6) est conçu comme module pour véhicule à direction à gauche ou comme module pour véhicule à direction à droite.

3. Unité de porte pour un bus selon les revendications 1 et 2,
**caractérisée en ce que** des raccords électriques, hydrauliques et pneumatiques standardisés et/ou d'autres éléments de liaison et de fixation mécaniques sont prédisposés sur le module de porte (6).

4. Unité de porte pour un bus selon les revendications 1 à 3,
**caractérisée en ce que** des conduites électriques, pneumatiques et/ou hydrauliques sont prémontées dans le module de porte (6).

5. Unité de porte pour un bus selon au moins l'une des revendications mentionnées précédemment,
**caractérisée en ce que** des sous-modules sont prévus et sont reliés au cadre de montage du module de porte (6) par des connexions électriques, des liaisons boulonnées ou des liaisons collées.

6. Unité de porte pour un bus selon au moins l'une des revendications mentionnées précédemment,
**caractérisée en ce que** la fixation du module de porte (6) avec l'ossature du véhicule est assurée au moyen d'éléments de fixation mécaniques.

7. Unité de porte pour un bus selon au moins l'une des revendications mentionnées précédemment,
**caractérisée en ce que** la fixation du module de porte (6) avec l'ossature du véhicule est assurée par collage.

8. Unité de porte pour un bus selon au moins l'une des revendications mentionnées précédemment,
**caractérisée en ce que** le module de porte (6) présente une porte à un vantail ou bien une porte à deux vantaux.

9. Unité de porte pour un bus selon au moins l'une des revendications mentionnées précédemment,
**caractérisée en ce que** le cadre de montage est conçu en forme de L ou présente un plancher de module.

10. Unité de porte pour un bus selon la revendication 9,
**caractérisée en ce que** un dispositif d'accès pour fauteuil roulant est intégré aux planchers de module.
